# EUROPEAN PATENT APPLICATION

(11) **EP 0 849 243 A2**
(43) Date of publication of application: **24.06.1998**
(21) Application number: 97310227.0
(22) Date of filing: 17.12.1997
(51) Int. Cl.: C05F 11/00, C05F 17/00

(54) **Plant growth product**

(30) Priority: 17.12.1996 GB 9626184
(71) Applicant: Campden & Chorleywood Food Research Association, Gloucestershire GL55 6LD (GB)
(72) Inventor: Evers, Anthony D., Herts AL3 8HY (GB)
(74) Representative: Lewin, John Harvey

(57) **Abstract**

The invention relates to a plant growth product prepared by composting vegetable matter consisting mainly of cereal bran in the presence of air and water. The plant growth product can be used in the formulation of a medium for growing plants, and in the formulation of a fertiliser for plants.

## Description

This invention relates to a plant growth product prepared by composting cereal bran.

Composting is a well known process in which vegetable matter undergoes partial biological degradation in the presence of air and water and under the action of naturally present bacteria and fungi. The resulting composts are useful for adding to growth media for plants, to provide nutrients and water holding capacity. Many kinds of vegetable matter have been employed in composting. Often a mixture of source materials has been used. The presence of a minor proportion of cereal bran in such mixtures has been reported. For example, JP-A-4 031 380 describes the preparation of a compost from 5t of soybean cake, 0.8t of rice hulls, 120kg of rice bran and 250ml of fermentation accelerator.

We have unexpectedly found that a product prepared by composting vegetable matter consisting mainly of cereal bran has valuable properties for use in a plant growth medium or in a fertiliser composition.

The present invention thus provides a plant growth product prepared by composting vegetable matter consisting mainly of cereal bran in the presence of air and water.

The cereal bran may be derived from cereals such as wheat, barley, oats, maize and rice. The term "cereal bran as used herein encompasses both bran itself and products closely related to bran, such as wheatfeed. The cereal bran is preferably wheat bran or wheatfeed, as by-products from milling without any additional treatment.

Cereal grains comprise a fruit coat and seed coat surrounding an embryo and a storage tissue known as the endosperm. The endosperm is the largest part, contributing about 80% of the total grain dry weight. It also contains the greatest amounts of nutrients, mainly starch, and is hence the part most valued for human food. In the case of wheat, it is the endosperm which the flour miller concentrates as white flour by a series of grinding stages between rollers, sievings, and in some cases other purifying operations. According to the manner of milling, the embryo may be concentrated as a separate fraction or it may be fragmented and included with the fruit coat and seed coat in the bran and wheatfeed fractions. Bran consists largely of flakes and is produced as an end product of the "break" system, by which grains are split open and the resulting fragments scraped. Wheatfeed is produced during the "reduction" process whereby particles scraped from bran during the break stages are reduced to flour particle size. Wheatfeed particles are smaller and more isodiametric than bran.

Separation during milling is not perfect and some endosperm remains attached to the seed- and fruit-coats. The composition of bran and wheatfeed is fairly consistent. In nutritional terms it is mainly valued for its fibre content which is needed in animal diets and can also be beneficial in human diets. In contrast to the fibre, the residual endosperm remaining on bran and wheatfeed can be digested by enzymes produced by the bacteria and fungi and this leads to a reduction in insoluble dry mass during composting.

Brans may be produced by methods other than those described. However, they all contain seed coats and fruit coats. When the term is applied strictly they would not include "husk", parts of the flower in which the fruit develops, but in species such as barley and rice, in which the husk adheres to the grain, it may be included.

In a preferred embodiment the vegetable matter to be composted consists entirely of cereal bran. No animal-derived matter is generally present. However, it is also possible for some other vegetable matter to be included. Waste products such as paper or wood waste can advantageously be composted with the bran. The bran preferably constitutes at least 50% by weight of the dry matter to be composted, more preferably at least 75% by weight, and most preferably 100% by weight. No other materials need be added to initiate or accelerate the process. Only the naturally present fungi and other microorganisms associated with bran are sufficient.

For composting to be carried out, water is added to the dry matter, preferably so as to constitute from 40% to 70% by weight of the total. During the processes of composting, heat is generated which raises the temperature from a mesophilic stage (up to 30°C) through to a thermophilic stage (50-70°C). A cycle of repeated re-heating after cooling can be initiated by turning and aerating the composting materials over a period eg up to 28 days. Eventually the compost may be allowed to mature over a period of up to 16 weeks as further, slower breakdown processes take place.

Composting is carried out in the presence of air or any other suitable oxygen-containing gas. The materials may be contained in small (preferably insulated) or large vessels, or piled up in turned or aerated windrows.

Bran is a good material for composting in that it contains both protein, rich in nitrogen, and carbohydrates. The carbon to nitrogen (C:N) ratio is low, approximately 15:1. Other carbon rich, but nitrogen poor, materials (such as paper or wood wastes) can be co-composted with the bran. This raises the initial C:N ratio to about 30:1 to 35:1 and leads to a more stable end product in a greater volume. Composting the bran alone leads to a more concentrated nutrient end product which can be used as an organic fertiliser base.

Water is required to wet up the bran for composting (approximately an equal weight to the bran to bring it to 60% moisture content). The water can be fresh water or wash water from other processing activities, such as starch production, thereby aiding a disposal problem.

The end product of composting bran on its own is a dark-coloured, nutrient-rich material with good water retention and fibre content. Dry matter is lost during composting and may lead to a 50% reduction in mass.

It is sometimes desirable to leach the compost end product of much of its mineral nutrients which become concentrated during the composting process. Excessive nutrients are adverse when the material is to be used directly as a growing medium. The leached material, after further stabilisation. is suitable for growing certain plants, for example in tomato growing bags. More extensive washing makes the material suitable for use as a potting compost of higher value. The washings can be re-used to wet up the bran in batches for use as organic fertiliser.

The invention also relates to a medium for growing plants comprising a plant growth product as defined above, optionally in admixture with an additional source of organic material and/or an inorganic bulking agent. The inorganic bulking agent may be based on clays and other materials, and helps to break up soils by separating particles without necessarily introducing nutrients. For some plant growth media, the composted bran is mixed with commercially available peat, coir or wood fibre in order to lower the pH and dilute the nutrient content. A suitable ratio of mixing is 20% composted bran to 80% of the other material in each case. The bran/peat mixture has been shown to be a suitable medium for growing tomatoes as was verified by pricking out seedlings which grew well. The coir and wood fibre mixtures had a pH and conductivity which was still too high for some applications, and a lower inclusion rate, eg. 10%, has been found suitable in some such cases.

By co-composting bran with other wastes low in nitrogen and potassium but high in carbon, the end product is more stable biologically. This is recommended where the end product is to be used in growing media. A greater inclusion rate could be used in the peat mixture, and less washing would be required where the composted materials were used predominantly on their own.

The composted bran is an organic fertiliser material having an analysis of 4:7:7 (N:P₂O₅:K₂O). A standard fertiliser, Growmore, has an analysis of 7:7:7. The composted bran is therefore of value as a base fertiliser material requiring some topping up with nitrogen.

The composted bran is also of use as an alternative to pelleted manures. It has advantageous properties of containing organic matter and is of liming value as a soil improver.

The composted bran is also of value for making biodegradable plant pots. These are at present made from a mixture of wood fibre and peat. The composted bran, with or without leaching, can be used as a replacement for the peat content.

### EXAMPLES

Two by-products from milling were obtained from RHM, Felixstowe: bran and 'wheatfeed'. Two composting operations were carried out, firstly on the bran alone and secondly with the wheatfeed. Both were wetted up with water to approximately 60% moisture content and composted in a drum that could be rotated occasionally to mix and aerate the materials.

The materials were analysed prior to composting, during the process and then at a final stage, in the case of the bran, at 4 months. The 4 month old bran compost was mixed with various substrates, re-analysed and plants grown in the mixtures.

### 1. Initial materials analysed

| | K% | N% | Organic carbon % | C:N ratio | Organic matter % |
|---|---|---|---|---|---|
| Bran | 1.74 | 2.55 | 39.3 | 15.4 | 93.5 |
| Wheatfeed | 1.53 | 2.44 | 39.7 | 16.3 | 94.6 |

Both materials have high K and N contents. The C:N ratio is rather lower than necessary as 30 to 35 would normally be recommended to achieve a stable end product. These lower values can lead to a loss of N from the system as ammonia. Either other waste products, low in N. can be added or the bran prepared in a way that reduces its N content. The high K becomes concentrated in the end product as composting proceeds. The final high K content has an adverse osmotic effect on plant growth. Either other waste materials, low in K, can be added. or the bran prepared in a way that reduces its K content.

Fresh water was used to wet up the bran materials but wash water from related industries can be used as a useful method of their disposal. An equal weight of water was found to be required to wet up the bran material to 60% moisture content. As will be discussed later, the liquid from washing the composted bran can also be used as an initial wetting source. Greater volumes of water can be utilised if the heat generated during composting is used to drive off moisture.

### 2. Composting

### 2.1 Bran

The bran was wetted to 60-70% moisture content (dry weight/wet weight), composted and sampled as follows:
composting started
sampled + 1 month
sampled + 2 months
removed from drum
sampled + 3 months
dried and sampled at + 4 months

The composting processes commenced rapidly on wetting of the materials without the addition of any other feedstocks as the bran contained adequate nitrogen and carbohydrates. The breakdown of carbohydrates. etc to CO₂ resulted in a loss in dry matter, estimated at 50%, and a concentration of salts.

The dried material was mixed with each of peat, coir or wood fibre as 20% by volume. Each blend was analysed and tested for plant growth with a range of species (Section 4). A sample of the dried material was also washed to reduce its conductivity.

### 2.2 Wheatfeed

The wheatfeed was wetted to 60-70% moisture content and composted and sampled as follows:
composting started
sampled + 2 months

### 3. Analysis results

Analysis results are shown in Table 1 to 5 below.

### 3.1 i. Bran + 1 month in process

The pH was high as would be expected at this stage. The proteins were being mineralised into NH₄-N. The conductivity was rising as, especially potassium, salts were released into solution from within the plant material.

### ii. Bran + 2 months in process

The pH had dropped slightly to 8.6 as some NH₄-N had been converted to nitrate. The conductivity had risen as the dry bulk density increased and some organic matter had been lost as CO₂, concentrating the salts. The air filled porosity (AFP) at 11% was good and the total water retained was similar to peat.

### iii. Bran + 3 months in process

The pH contained to fall to 7.8 with fungi possibly utilising some of the available nitrogen which was at a lower concentration at this stage. The conductivity continued to rise.

### iv. Bran + 4 months in process

The pH in the dried composted bran was 7.4 and all nutrients had generally become concentrated, partly due to the drying process. The product resembled an organic fertiliser with the structure of fine peat. This end product could be blended with peat. or other substrates, to replace part of the peat and also add nutrients.

### v. Leached, composted bran

The 4 month dried composted bran was re-saturated with demineralised water.

1 litre (314 g) contained 20% moisture ie. 63 g of water. 500 g water was added bringing the compost to 70% moisture by weight. One litre aliquots of demineralised water were added at a time, pressed out and the conductivity of the liquid measured. Four aliquots were added:

| | Leachate conductivity | |
|---|---|---|
| 1st litre | 13 x 10³ | MicroSiemens (microS)/cm |
| 2nd litre | 6.6 x 10³ | |
| 3rd litre | 3.8 x 10³ | |
| 4th litre | 2.1 x 10³ | |

The resulting leached material remaining was analysed and the conductivity had been reduced to 790 microS/cm, not much above a multipurpose compost which would typically be 500-600 microS/cm. However. the pH had risen between leaching and analysis possibly due to some microbial activity in the days between. The other difference between a multipurpose compost and this product was the available nitrogen being in NH₄-N form which would require conversion to nitrate form for most, and especially the sensitive, plant species.

### 3.2 i. Wheatfeed + 2 months in process

The analysis of this material composted gave results similar to those for bran.

### 3.3 Bran mixes

The dried composted bran was mixed with peat, coir and wood fibre (Sylvafibre). The analysis of these three base materials is shown and can be used in comparison with those for the blended products. The analysis of a peat-based multipurpose compost is also shown.

Peat is a low pH (4.0), low conductivity (110 µS/cm) stable product. Sylvafibre also has a low conductivity (85 µS/cm) but a higher pH of 6.1. Coir contains more soluble salts, mainly potassium, giving a higher conductivity (180 µS/cm) with a pH of 6.3. The Sylvafibre is a more open, but denser product, compared with peat and coir.

The composted bran was added at 20% of the mix by volume in each case. The peat/bran mix resulted in a pH of 6.1 and a conductivity of 720 µS/cm. This would be an optimum mixture rate for a vigorous plant, eg tomatoes, but excessive for more sensitive species, which may not enjoy the available nitrogen as NH₄-N. The coir/bran at this rate of mix resulted in excessive pH and conductivity, with Sylvafibre/bran intermediate.

### 4. Plant growth

A number of plant species seedlings were transplanted into the mixtures. The best growth, equal to a commercially available peat-based multipurpose product, was of tomatoes in the peat/bran mix. Tomatoes are very vigorous and can tolerate higher salt concentrations (conductivity) than many other species. Pelargonium seedling growth was also reasonable but less vigorous than that of seedlings in the multipurpose product. Lower inclusion rates are required for the other species or use made of a co-composted or washed material.

**TABLE 1**

| **Analysis of Bran after composting for 4 months** | | | | | |
|---|---|---|---|---|---|
| **Test** | | **Units** | | | |
| | | | | | |
| Bulk density | | g/l fresh compost | | 312 | |
| Moisture as received | | % w/w fresh compost | | 19.5 | |
| pH | | | | 7.4 | |
| Conductivity | | microS/cm | | 5000 | |
| Organic matter by LOI | | % of dry matter | | 82 | |
| Organic carbon | | % of dry matter | | 31.2 | |
| | | | | | |
| Dry matter content | | g/l fresh compost | | 251 | |
| Organic matter content | | g/l fresh compost | | 206 | |
| Organic carbon | | g/l fresh compost | | 78 | |
| | | | | | |
| | | mg/l fresh | | | |

| | | **material** | | **% DM** | |
|---|---|---|---|---|---|
| Total nitrogen | | 10650 | | 4.24 | DM = Dry matter |
| | | | | | |

| | **Totals** | | **Water extractables** | | |
|---|---|---|---|---|---|
| | mg/l fresh | | mg/l fresh | | |
| | **material** | **% DM** | **material** | | **% DM** |
| | | | | | |
| NH4-N | N/A | | 990 | | 0.39 |
| NO3-N | N/A | | 3 | | 0.00 |
| P | 8400 | 3.34 | 458 | | 0.18 |
| K | 14064 | 5.60 | 9924 | | 3.95 |
| Mg | 3228 | 1.29 | 144 | | 0.06 |
| Ca | 738 | 0.29 | 37 | | 0.01 |
| Na | 86 | 0.03 | 74 | | 0.03 |
| Cl | | | | | |
| S | 734 | 0.29 | 236 | | 0.09 |

**TABLE 2**

| **Analysis of Bran after composting for 4 months and leaching** | | | | |
|---|---|---|---|---|
| **Test** | **Units** | | | |
| | | | | |
| Bulk density | g/l fresh compost | | 519 | |
| Moisture as received | % w/w fresh compost | | 78.5 | |
| pH | | | 8.9 | |
| Conductivity | microS/cm | | 790 | |
| Organic matter by LOl | % of dry matter | | 90 | |
| Organic carbon | % of dry matter | | 35 | |
| | | | | |
| Dry matter content | g/l fresh compost | | 112 | |
| Organic matter content | g/l fresh compost | | 100 | |
| Organic carbon | g/l fresh compost | | 39 | |
| | | | | |
| | mg/l fresh | | | |

| | | **material** | **% DM** | |
|---|---|---|---|---|
| Total nitrogen | | 3160 | 2.83 | DM = Dry matter |
| | | | | |
| C:N ratio | 12 | | | |
| | | | | |

| | **Totals** | | **Water extractables** | |
|---|---|---|---|---|
| | mg/l fresh | | mg/l fresh | |
| | **material** | **% DM** | **material** | **% DM** |
| | | | | |
| NH4-N | N/A | | 258 | 0.23 |
| NO3-N | N/A | | 3 | 0.00 |
| P | 1954 | 1.75 | 434 | 0.39 |
| K | 1881 | 1.69 | 822 | 0.74 |
| Mg | 1632 | 1.46 | 28 | 0.03 |
| Ca | 273 | 0.24 | 13 | 0.01 |
| Na | 20 | 0.02 | 17 | 0.02 |
| Cl | | | | |
| S | 278 | 0.25 | 27 | 0.02 |

**TABLE 3**

| **Analysis of Wheatfeed after composting for 2 months** | | | | |
|---|---|---|---|---|
| **Test** | **Units** | | | |
| | | | | |
| Bulk density | g/l fresh compost | | 521 | |
| Moisture as received | % w/w fresh compost | | 73.5 | |
| pH | | | 8.6 | |
| Conductivity | microS/cm | | 3700 | |
| Organic matter by LOI | % of dry matter | | | |
| Organic carbon | *%* of dry matter | | | |
| | | | | |
| Dry matter content | g/l fresh compost | | 138 | |
| Organic matter content | g/l fresh compost | | | |
| Organic carbon by calc. DM*0.44 | g/l fresh compost | | | |
| | mg/l fresh | | | |

| | **material** | | **% DM** | |
|---|---|---|---|---|
| Total nitrogen | | | DM = Dry matter | |
| | | | | |
| C:N ratio | | | | |
| | | | | |

| | **Totals** | | **Water extractables %** | |
|---|---|---|---|---|
| | mg/l fresh | | mg/l fresh | |
| | material | **% DM** | **material** | **% DM** |
| | | | | |
| NH4-N | N/A | | 1920 | 1.39 |
| NO3-N | N/A | | 3 | 0.00 |
| P | | | 1200 | 0.87 |
| K | | | 3132 | 2.27 |
| Mg | | | 5 | 0.00 |
| Ca | | | | |
| Na | | | | |
| Cl | | | | |
| S | | | | |

**TABLE 4**

| **Analysis of Peat** | | | | |
|---|---|---|---|---|
| **Test** | **Units** | | | |
| | | | | |
| Bulk density | g/l fresh compost | | 252 | |
| Moisture as received | % w/w fresh compost | | 56 | |
| pH | | | 4 | |
| Conductivity | microS/cm | | 110 | |
| Organic matter by LOL % | of dry matter | | 96 | |
| Organic carbon | % of dry matter | | 35.4 | |
| | | | | |
| Dry matter content | g/l fresh compost | | 111 | |
| Organic matter content | g/l fresh compost | | 106 | |
| Organic carbon | g/l fresh compost | | 39 | |
| | | | | |
| | mg/l fresh | | | |

| | **material** | | **% DM** | |
|---|---|---|---|---|
| Total nitrogen | 1571 | | 1.42 DM = Dry matter | |
| C:N ratio | 25 | | | |
| | | | | |

| | **Totals** | | **Water extractables** | |
|---|---|---|---|---|
| | mg/l fresh | | mg/l fresh | |
| | **material** | **% DM** | **material** | **% DM** |
| | | | | |
| NH4-N | N/A | | 30 | 0.03 |
| NO3-N | N/A | | 17.4 | 0.02 |
| P | 23 | 0.02 | 5 | 0.00 |
| K | 11 | 0.01 | 5 | 0.00 |
| Mg | 231 | 0.21 | 6 | 0.01 |
| Ca | 483 | 0.44 | 12 | 0.01 |
| Na | 37 | 0.03 | 30 | 0.03 |
| Cl | | | | |
| S | 218 | 0.20 | 40 | 0.04 |

**TABLE 5**

| **Analysis of 80/20 Peat/Composted Bran** | | | | |
|---|---|---|---|---|
| **Test** | **Units** | | | |
| | | | | |
| Bulk density | g/l fresh compost | | 302 | |
| Moisture as received | % w/w fresh compost | | 54.5 | |
| pH | | | 6.1 | |
| Conductivity | microS/cm | | 720 | |
| Organic matter by LOl | % of dry matter | | 92 | |
| Organic carbon | of dry matter | | 35.4 | |
| | | | | |
| Dry matter content | g/l fresh compost | | 137 | |
| Organic matter content | g/l fresh compost | | 126 | |
| Organic carbon | g/l fresh compost | | 49 | |
| | | | | |
| | mg/l fresh | | | |

| | **material** | | **% DM** | |
|---|---|---|---|---|
| Total nitrogen | 3139 | | 2.28 DM = Dry matter | |
| | | | | |
| C:N ratio | 15 | | | |
| | | | | |

| | **Totals** | | **Water extractables** | |
|---|---|---|---|---|
| | mg/l fresh | | mg/l fresh | |
| | **material** | **%. DM** | **material** | **% DM** |
| | | | | |
| NH4-N | N/A | | 240 | 0.17 |
| NO3-N | N/A | | 12 | 0.01 |
| P | 1318 | 0.96 | 805 | 0.59 |
| K | 1929 | 1.40 | 702 | 0.51 |
| Mg | 691 | 0.50 | 15 | 0.01 |
| Ca | 538 | 0.39 | 20 | 0.01 |
| Na | 44 | 0.03 | 34 | 0.02 |
| Cl | | | | |
| S | 291 | 0.21 | 64 | 0.05 |

## Claims

1. A plant growth product prepared by composting vegetable matter consisting mainly of cereal bran in the presence of oxygen-containing gas and water.

2. A plant growth product according to claim 1, in which the vegetable matter consists substantially of cereal bran.

3. A plant growth product according to claim 1 or 2, in which from 40% to 70% by weight of water, based on the total weight, has been added to the cereal bran prior to composting.

4. A plant growth product according to any of claims 1 to 3, in which the composted cereal bran has been leached with water.

5. A plant growth product substantially as hereinbefore described with reference to the Examples.

6. A medium for growing plants comprising a plant growth product according to any of claims 1 to 5, optionally in admixture with an additional source of organic material and/or an inorganic bulking agent.

7. A medium according to claim 6, in which the additional source of organic material is peat coir or woodfibre.

8. Use of a plant growth product according to any of claims 1 to 5 in the formulation of a nmedium for growing plants.

9. Use of a plant growth product according to any of claims I to 5 in the formulation of a fertiliser for plants.
